Europäisches Patentamt

European Patent Office

Office européen des brevets

(11) Veröffentlichungsnummer : **0 025 584**
**B1**

(12) **EUROPÄISCHE PATENTSCHRIFT**

(45) Veröffentlichungstag der Patentschrift :
13.07.83

(51) Int. Cl.³ : **B 01 D 53/00**, G 21 F 9/02

(21) Anmeldenummer : **80105398.4**

(22) Anmeldetag : **10.09.80**

(54) **Spaltprodukt-Filter für heisses Reaktorkühlgas.**

(30) Priorität : **14.09.79 DE 2937209**

(43) Veröffentlichungstag der Anmeldung :
**25.03.81 Patentblatt 81/12**

(45) Bekanntmachung des Hinweises auf die Patenterteilung : **13.07.83 Patentblatt 83/28**

(84) Benannte Vertragsstaaten :
**BE CH FR GB IT LI**

(56) Entgegenhaltungen :
**DE A 2 318 217**
**DE A 2 447 802**
**DE A 2 655 296**
**DE A 2 655 310**
**DE A 2 731 327**
**DE A 2 751 640**
**DE A 2 823 575**
**DE A 2 932 365**
**DE U 66 087 07**
**FR A 1 346 627**
**FR A 2 284 358**
**GB A 985 550**
**GB A 1 253 878**
**GB A 1 451 786**

(73) Patentinhaber : **Kernforschungsanlage Jülich Gesellschaft mit beschränkter Haftung**
**Postfach 1913**
**D-5170 Jülich (DE)**

(72) Erfinder : **Förster, Siegfried, Dr.**
**Ottenfeld 1**
**D-5110 Alsdorf (DE)**
Erfinder : **Iniotakis, Nicolaos**
**Kopernikusstrasse 64**
**D-5170 Jülich (DE)**
Erfinder : **Quell, Peter, Dr.**
**Birkenweg 23**
**D-5100 Aachen (DE)**

(74) Vertreter : **Paul, Dieter-Alfred, Dipl.-Ing.**
**Erftstrasse 82**
**D-4040 Neuss 1 (DE)**

## Spaltprodukt-Filter für heißes Reaktorkühlgas

Die Erfindung betrifft einen Spaltprodukt-Filter für heißes Reaktorkühlgas, insbesondere Helium, mit einem gasdicht ummantelten Hohlraum, in dem ein Filtermaterial vorgesehen ist, welches die Teilchen durch Wechselwirkung mit seiner Oberfläche zurückzuhalten vermag, vom Gas zu durchflutende, in geordneten Geometrien vorliegende Kanäle aufweist und aufgrund seiner Anordnung im Hohlraum vom Gas in Längsrichtung durchströmbar und in Längs- oder Querrichtung umströmbar ist.

Bei einem Hochtemperaturreaktor benötigt man zur Rückhaltung von Spaltprodukten, die in heißem Reaktorkühlgas, insbesondere Helium, enthalten sind, hochwirksame Abscheider. Die unvermeidlich in das Reaktorkühlgas gelangenden Spaltprodukte würden sich sonst unmittelbar hinter dem Reaktorauslaß in den vom Reaktorkühlgas durchströmten Komponenten niederschlagen und die Wartungs-, Inspektions- und Reparaturarbeiten durch den hohen Strahlungspegel zumindest stark erschweren, wenn nicht unmöglich machen. Das gilt insbesondere für eine im Reaktorkühlkreislauf betriebene Helium-Turbine.

Es ist bereits ein Filter zur Reinigung eines strömenden Gases von einer in Form atomarer oder molekularer Teilchen vorliegender Substanz sowie ein Verfahren zur Herstellung eines solchen Filters beschrieben worden (DE-OS 26 55 310, DE-OS 26 55 296), wonach es möglich ist, beim Durchleiten eines Reaktorkühlgases wie Helium durch ein mit metallischem Werkstoff gebildetes Filter die Spaltprodukte so in Wechselwirkung mit diesen Wänden zu bringen, daß sie sich daran ablagern und somit aus dem Gas ausgefiltert werden. Außerdem wird dadurch die Beladung von Staubpartikeln mit Aktivierungsprodukten weitgehend vermieden. Die vorgenannten Literaturstellen beschreiben auch das mathematische Dimensionier- und Optimierungsverfahren solcher Filter.

Hingegen fehlte es bisher an einem einfach herzustellenden und trotzdem eine hochwirksame Geometrie aufweisenden metallischen Filter, mit dem es möglich ist, die im Reaktorkühlgas befindlichen Spaltprodukte soweit zu entfernen, daß hinter dem Filter nur mehr eine so geringe Radioaktivität im Kühlgas vorhanden ist, die auch nach einer längeren Reaktor-Betriebszeit eine nahezu unbeschränkte Zugänglichkeit zu den Kresilaufkomponenten zuläßt. Die Schaffung eines derartigen Filters ist Aufgabe der Erfindung. Ein solches Filter soll speziell für alle Hochtemperaturreaktor-Anwendungsfälle brauchbar sein, einen unkomplizierten Aufbau haben und auch als eine in der Reaktoranlage befindliche Baueinheit leicht ein- und ausgebaut werden können.

Diese Aufgabe wird dadurch gelöst, daß als Filtermaterial ein Wellblechwickel verwendet wird.

Vorzugsweise wird das Filtermaterial aus zwei gleichzeitig über einen Kern spiegelbildlich aufgewickelten gewellten Blechen gebildet.

Insbesondere sind die Bleche mit sinusförmigem und mit gleichem geradlinigen, im Winkel $\alpha$ von der Wickelachse abweichenden Verlauf von Wellenrücken versehen, wobei durch die Aufwicklung Kreuzungen der Wellungen zwischen benachbarten Blechlagen entstehen und somit Abstützungen und Gasdurchlässe gebildet werden.

Der so entstandene Wickelkörper wird zweckmäßig mit einem äußeren gasdichten Einfassungsrohr versehen, und der so eingefaßte Wickelkörper mit einer lösbaren Verankerung in der Heißgasleitung vom Reaktor zu Turbine sowie mit lösbaren Gaszu- und Gasabführungsanschlüssen ausgerüstet.

In weiterer Ausgestaltung der Erfindung werden mehrere so gewickelte Körper hintereinander angeordnet und in das erwähnten gasdichte Einfassungsrohr eingesetzt.

Um dem oder den in der äußeren Einfassung eingesetzten Wickelkörper den nötigen Halt zu geben, ist am oberen und unteren Ende des Wickelkörpers jeweils ein aus mehreren Rippen gebildetes sternförmiges Joch angeordnet, wobei die beiden Joche über den äußeren Umfang des Einfassungsrohres und durch den Kern des Wickelkörpers miteinander verbunden sind.

Damit durch die beiden verspannten Joche der gesamte Wickelkörper in die Heißgasleitung eingebaut werden kann, ist in weiterer Ausgestaltung der Erfindung an dem einen Joch, vorzugsweise auf der Heißgaszuführungsseite, die äußere Einfassung mit einem umschließenden Wulst versehen, der als Flansch ausgebildet ist oder der bajonettartige Verschlüsse und nutenförmige Ausnehmungen hat, die in einem am äußeren Umfang der Heißgasleitung umlaufenden und dort fest verankerten bajonettartigen, nutenförmigen Gegenstück eingreift.

Um das Filter ausbauen zu können, wird man beispielsweise einen bajonettverschlußartigen Befestigungsring am oberen Ende eines vertikal angeordneten Filters vorsehen. Dieser Filter kann nach Lösen des Bajonett-Verschlusses nach unten ausgebaut werden.

Die Gaszu- und die Gasabführung am Filter erfolgt erfindungsgemäß über am Filter angebrachte Gasführungsrohre mittels bekannter kolbenringdichtender Schiebeverbindungen. Das untere Gasführungsrohr wird vor dem Ausbau des Filters entfernt.

Wegen starker Kontamination kann es gegebenenfalls wünschenswert sein, den Ausbau des Filters durch eine fernbedienbare Einrichtung vorzunehmen. Eine solche Fernbedienungs-Einrichtung erfaßt das Filter nach Ausbau der unteren Heißgasleitung am unteren Joch, dreht es aus dem bajonettartigen Verschluß am oberen Joch und senkt es nach unten ab.

Weitere Ziele, Vorteile und Merkmale der Erfindung ergeben sich aus der folgenden Beschreibung und den Unteransprüchen.

Die Erfindung ist im nachstehenden anhand der Zeichnung in einem bevorzugten Ausführungsbeispiel näher erläutert.

Figur 1 zeigt perspektivisch einen Ausschnitt aus einem Wellkörper für die Herstellung eines Filters nach der Erfindung.

Figur 2 zeigt in schematischer, perspektivischer Darstellung das Wickelprinzip für den Blechkörper nach Fig. 1.

Figur 3 ist eine zum Teil geschnittene Seitenansicht eines Filters nach der Erfindung, der in eine Reaktoranlage eingebaut ist.

Figuren 4 und 5 zeigen in vergrößertem Maßstab Einzelheiten des Filters nach Fig. 3, und zwar Fig. 4 in horizontalem und

Figur 5 in vertikalem Teilschnitt.

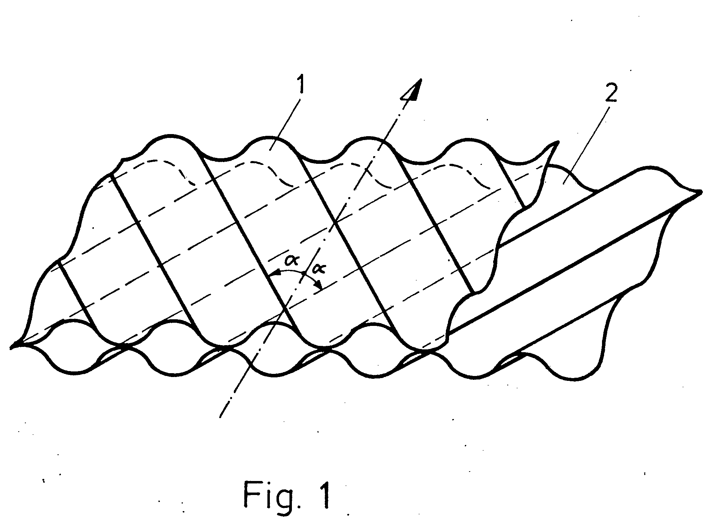

In Fig. 1 ist ein Abschnitt zweier benachbarter gewellter Bleche 1, 2 dargestellt. Der Querschnitt der Wellen ist jeweils sinusförmig, und die Richtung der Wellenrücken verläuft geradlinig und unter einem kleinen Winkel zur Durchströmrichtung, die durch einen Pfeil gekennzeichnet ist.

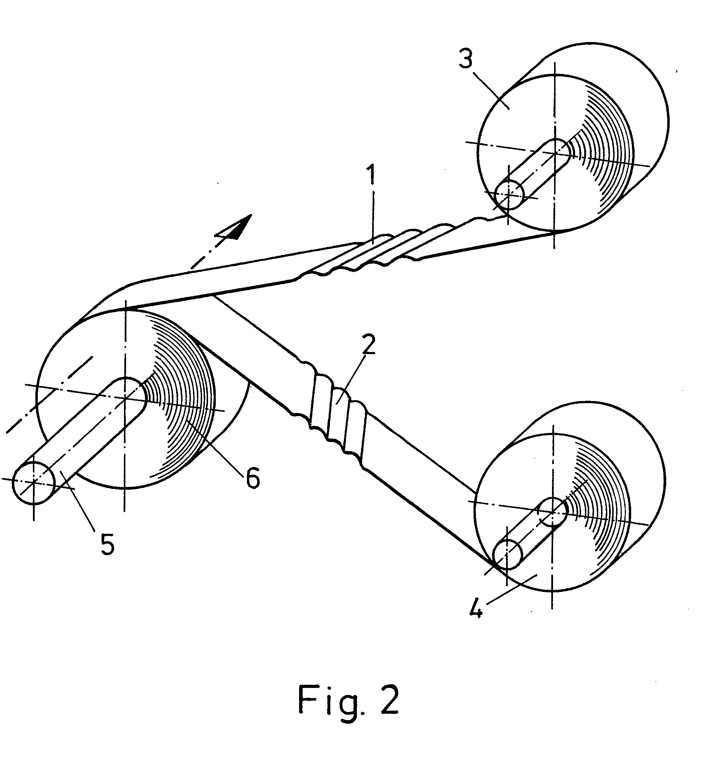

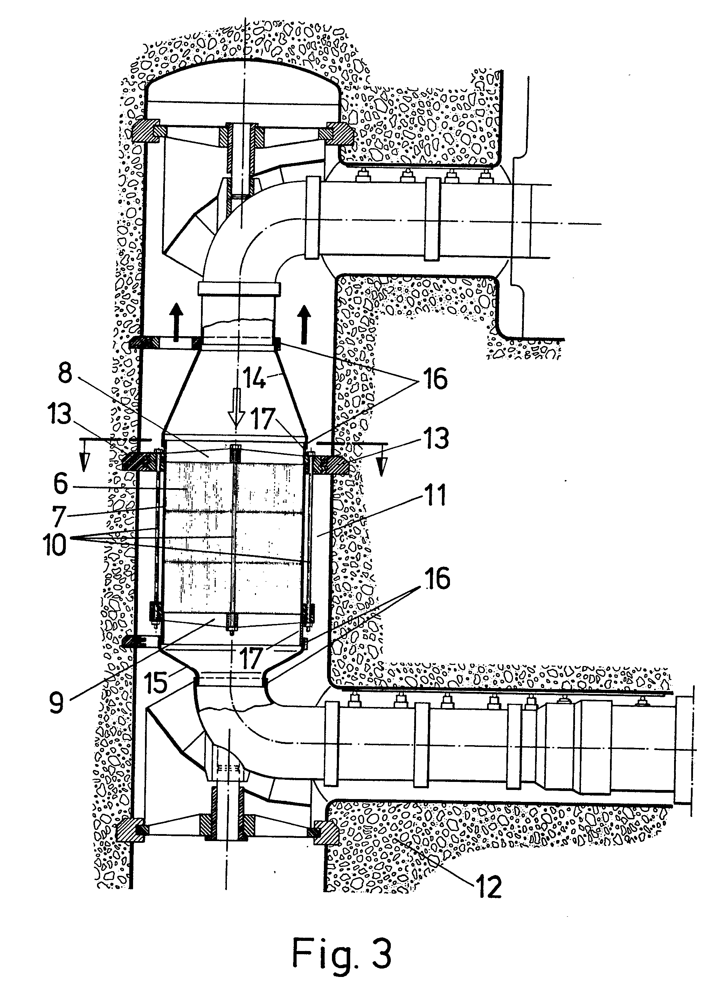

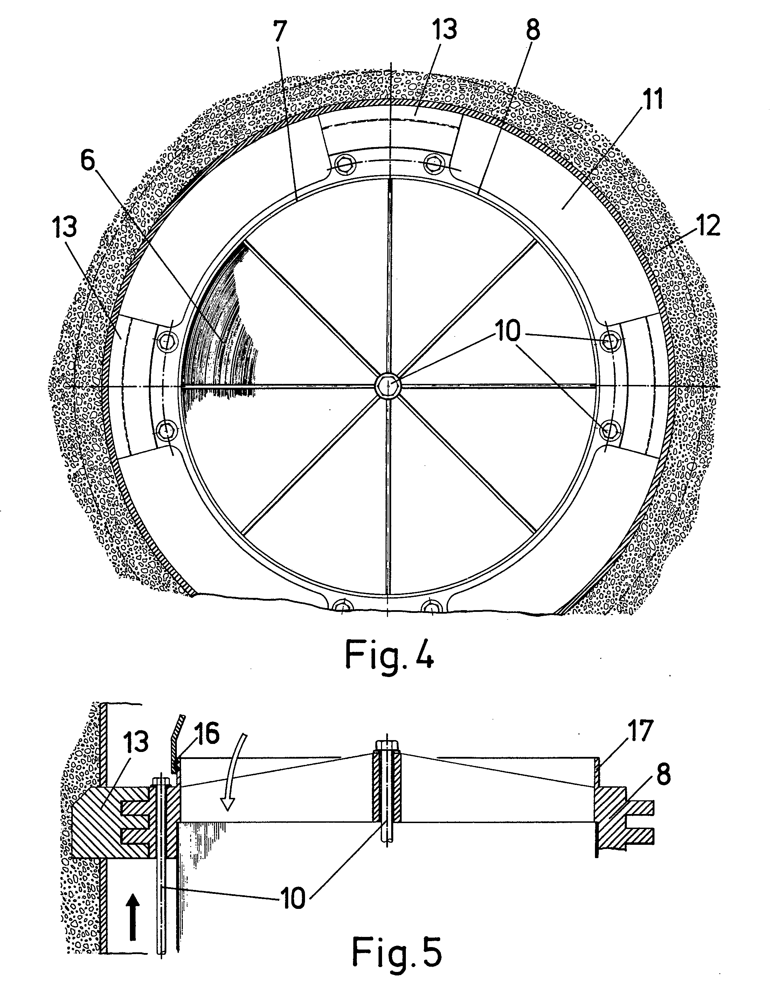

Figur 2 zeigt die Aufwickelung von zwei Blechen 1, 2 mit gleichartigen sinusförmigen Wellungen und geradlinigen Wellenrücken, die von den Vorratsrollen 3, 4 spiegelbildlich zueinander über einen Dorn 5 zu einem Matrixkörper 6 aufgewickelt werden. Die Durchströmrichtung ist durch den Pfeil angegeben. Es sind jeweils nur Ausschnitte der Wellungen in den Blechen 1 und 2 kenntlich gemacht. Der Wickelkörper wird wie aus den Fig. 3, 4 und 5 ersichtlich in ein äußeres gasdichtes Rohr 7 eingesetzt und über ein oberes 8 und unteres 9 sternförmiges Joch mittels Zuganker 10 verspannt.

Die Figuren 3, 4 und 5 zeigen einen Spaltprodukt-Filter für heißes Reaktor-Helium im Längs- und Querschnitt, eingebaut in einen Heißgasführungs-Schacht 11 eines Reaktordruckbehälters aus Spannbeton 12. Das Filter wird von dem bajonettartig ausgebildeten oberen Jochring 8 und seinem Gegenstück 13, welches im Spannbetonbehälter verankert ist, fixiert und getragen.

Die Gaszuführung 14 und Gasabführung 15 sind über kolbenringdichtende Schiebeverbindungen am Außenrohr 16 angeschlossen, wobei die Anschlußenden des Außenrohres 17 über den tragenden Teil der Joche hinausragen. Mit einem Heißgas-Filter des erfindungsgemäßen Ausführungsbeispiels, das einen Wickelpaketdurchmesser von 3 m und eine gerade Durchströmlänge von etwa 3,3 m hat, wird bei Anordnung von einem Filter in je einer von zwei Heißgasführungen vom Reaktor zu übrigen Kreislauf einer Hochtemperaturreaktor-Anlage mit Helium-Turbine und mit einer elektrischen Leistung von 650 MWe, eine Filterwirksamkeit erreicht, die bei den nachgeschalteten Komponenten nach einer Betriebszeit über die Lebensdauer des Kraftwerks keine höheren Strahlendosis-Werte zur Folge hat als etwa 30 bis 50 mrem/h. Ohne dieses Filter wären Dosiswerte an der Turbine zu erwarten, die in der Größenordnung um einen Faktor von ca. $10^3$ höher liegen. Filter der beschriebenen Art können aber auch in anderen Hochtemperaturreaktor-Anlagen, wie z. B. für die Prozesswärmebereitstellung oder sogenannte Zweikreisanlagen mit Helium-Primär- und Dampfturbinen-Sekundärkreislauf, mit ähnlichem Erfolg eingesetzt werden.

**Ansprüche**

1. Spaltprodukt-Filter für heißes Reaktorkühlgas, insbesondere Helium, mit einem gasdicht ummantelten Hohlraum, in dem ein Filtermaterial vorgesehen ist, welches die Teilchen durch Wechselwirkung mit seiner Oberfläche zurückzuhalten vermag, vom Gas zu durchflutende, in geordneten Geometrien vorliegende Kanäle aufweist und aufgrund seiner Anordnung im Hohlraum vom Gas in Längsrichtung durchströmbar und in Längs- oder Querrichtung umströmbar ist, dadurch gekennzeichnet, daß das Filtermaterial ein Wellblechwickel (6) ist.

2. Spaltprodukt-Filter nach Anspruch 1, dadurch gekennzeichnet, daß das Filtermaterial (6) aus zwei gleichzeitig über einen Kern (5) spiegelbildlich aufgewickelten gewellten Blechen (1, 2) gebildet ist.

3. Spaltprodukt-Filter nach Anspruch 2, dadurch gekennzeichnet, daß die Bleche (1, 2) mit sinusförmigem und mit gleichem geradlinigen, im Winkel (α) von der Wickelachse abweichenden Verlauf von Wellenrücken versehen sind.

4. Spaltprodukt-Filter nach Anspruch 1, 2 oder 3, dadurch gekennzeichnet, daß der Wickelkörper (6) mit einem äußeren gasdichten Einfassungsrohr (7) versehen, und der so eingefaßte Wickelkörper mit einer lösbaren Verankerung (10) in der Heißgasleitung vom Reaktor zur Turbine sowie mit Lösbaren Gaszu- und Gasabführungs-anschlüssen (14, 15) ausgerüstet ist.

5. Spaltprodukt-Filter nach einem der vorhergehenden Ansprüche, dadurch gekennzeichnet, daß mehrere Wickelkörper (6) hintereinander angeordnet und in das gasdichte Einfassungsrohr (7) eingesetzt sind.

6. Spaltprodukt-Filter nach Anspruch 4 oder 5, dadurch gekennzeichnet, daß am oberen und unteren Ende des Wickelkörpers (6) jeweils ein aus mehreren Rippen gebildetes sternförmiges Joch (8, 9) angeordnet ist, wobei die beiden Joche (8, 9) über den äußeren Umfang des Einfassungsrohres (7) und durch den Kern des Wickelkörpers (6) miteinander verbunden sind.

7. Spaltprodukt-Filter nach Anspruch 6, dadurch gekennzeichnet, daß an dem einen Joch (8), vorzugsweise dem auf der Gaszuführungsseite, die äußere Einfassung mit einem umschließenden Wulst versehen ist, der als Flansch ausgebildet ist oder der bajonettartige Verschlüsse und nutenförmige Ausnehmungen hat, die in einem am äußeren Umfang der Heiß-Gasleitung umlaufenden und dort fest verankerten bajonettartigen, nutenförmigen Gegenstück (13) eingreift.

8. Spaltprodukt-Filter nach Anspruch 7, dadurch gekennzeichnet, daß ein bajonettverschlußartiger Befestigungsring (8) am oberen Ende eines vertikal angeordneten Filters vorgesehen ist.

9. Spaltprodukt-Filter nach einem der vorhergehenden Ansprüche, dadurch gekennzeichnet, am Filter Gaszu- und Gasabführungsrohre (14, 15) über kolbenringdichtende Schiebeverbindungen angebracht sind.

10. Spaltprodukt-Filter nach einem der vorhergehenden Ansprüche, dadurch gekennzeichnet, daß eine fernbedienbare Einrichtung vorgesehen ist, mit der nach Ausbau der unteren Heiß-Gasleitung das Filter am unteren Joch (9) erfaßt aus dem bajonettartigen Verschluß am oberen Joch (8) gedreht und nach unten abgesenkt werden kann.

## Claims

1. Fission-product filter for hot reactor cooling gas, in particular helium, with a cavity which is encased in a gastight manner, in which a filter material is installed, this filter material being capable of holding back the particles as a result of interaction with its surface, possessing passages through which the gas is to flow and which are present in ordered geometries and, due to its arrangement in the cavity, permitting the gas to flow through it in the longitudinal direction and to flow around it in the longitudinal direction or in the transverse direction, characterised in that the filter material is a winding (6) which is composed of corrugated metal sheet.

2. Fission-product filter according to claim 1, characterised in that the filter material (6) is formed from two corrugated metal sheets (1, 2) which are wound over a core (5), simultaneously and in a mirror-image arrangement.

3. Fission-product filter according to claim 2, characterised in that the metal sheets (1, 2) are provided with a sinusoidal run or corrugation-crests, deviating from the winding axis in a straight line and at an angle ($\alpha$).

4. Fission-product filter according to claim 1, 2 or 3, characterised in that the wound body (6) is provided with an outer, gastight skirt-tube (7) and, thus enclosed, the wound body is equipped with an anchorage (10) in the hot gas line from the reactor to the turbine, this anchorage being releasable, as well as with detachable gas-inlet and gas-outlet connections (14, 15).

5. Fission-product filter according to one of the preceding claims, characterised in that a plurality of wound bodies (6) are arranged one behind another, and are inserted into the gastight skirt-tube (7).

6. Fission-product filter according to claim 4 or 5, characterised in that star-shaped yokes (8, 9) are located at the upper and lower ends of the wound body (6), these yokes (8, 9) being formed, in each case, by a plurality of ribs and being interconnected via the outer periphery of the skirt-tube (7) and by the core of the wound body (6).

7. Fission-product filter according to claim 6, characterised in that, on one of the yokes, preferably on the yoke (8) on the gas-inlet side, the outer rim, provided with an encircling thickened portion which is designed as a flange or which possesses bayonet-type loscking devices and groove-shaped recesses, engages in a bayonet-like, groove-shaped matching pieces (13) which extends around the outer periphery of the hot gas line and is rigidly anchored there.

8. Fission-product filter according to claim 7, characterised in that a mounting ring (8) is installed at the upper end of a filter which is arranged vertically, this mounting ring being designed in the manner of a bayonet-type locking device.

9. Fission-product filter according to one of the preceding claims, characterised in that gas-inlet and gas-outlet pipes (14, 15) are attached to the filter by means of sliding connections which seal by means of piston rings.

10. Fission-product filter according to one of the preceding claims, characterised in that a remotelycontrollable device is installed, which, after disassembly of the lower hot gas line, enables the filter, gripped at the lower yoke (9), to be rotated out of the bayonet-type locking device on the upper yoke (8), and to be lowered.

## Revendications

1. Filtre à produit fissile pour du gaz chaud de refroidissement de réacteur, notamment pour de l'hélium, comprenant une chambre entourée de manière étanche au gaz, dans laquelle est prévu un matériau formant filtre qui peut retenir les particules par interaction avec sa surface, qui comporte des canaux pour le passage du gaz se présentant suivant des géométries ordonnées et qui, en raison de sa disposition dans la chambre, peut être traversé par le gaz suivant la direction longitudinale et peut être contournée par le gaz suivant la direction longitudinale ou transversale, caractérisé en ce que le matériau formant filtre est une bobine de tôle ondulée (6).

2. Filtre à produit fissile suivant la revendication 1, caractérisé en ce que le matériau formant filtre (6) est constitué de deux tôles (1, 2) enroulées, symétriquement comme en un miroir, simultanément sur un mandrin (5).

3. Filtre à produit fissile suivant la revendication 2, caractérisé en ce que les tôles (1, 2) sont munies d'un tracé des sommets d'ondulation sinusoïdal et s'écartant rectilignement du même angle ($\alpha$) de l'axe de la bobine.

4. Filtre à produit fissile suivant la revendication 1, 2 ou 3, caractérisé en ce que le corps de bobine (6) est muni d'un tuyau (7) extérieur, étanche au gaz, qui l'entoure, et le corps de bobine ainsi entouré est équipé d'un ancrage (10) amovible dans le conduit pour le gaz chaud menant du réacteur à la turbine ainsi que de raccords (14, 15) amovibles d'amenée et d'évacuation du gaz.

5. Filtre à produit fissile suivant l'une des revendications précédentes, caractérisé en ce que plusieurs corps de bobine sont disposés l'un derrière l'autre et sont enfilés dans le tuyau (7) étanche au gaz qui les entoure.

6. Filtre à produit fissile suivant la revendication 4 ou 5, caractérisé en ce qu'aux extrémités supérieure et inférieure du corps de bobine (6) est disposée respectivement une carcasse (8, 9) en forme d'étoile constituée de plusieurs nervures, les deux carcasses (8, 9) étant reliées l'une à l'autre sur le pourtour extérieur du tuyau (7) d'entourage et par le mandrin du corps de bobine (6).

7. Filtre à produit fissile suivant la revendication 6, caractérisé en ce que sur l'une des carcasses (8), de préférence sur celle se trouvant du côté de l'amenée du gaz, le tube d'entourage extérieur est muni d'un bourrelet en faisant le tour, agencé en bride ou ayant une fermeture de type à baïonnette et un évidement en forme de gorge, qui s'engage dans une pièce conjuguée (13) en forme de gorge, de type à baïonnette, faisant le tour du pourtour extérieur du conduit pour le gaz chaud et y est ancré solidement.

8. Filtre à produit fissile suivant la revendication 7, caractérisé en ce qu'une bague de fixation (8) de type à fermeture à baïonnette est prévue à l'extrémité supérieure d'un filtre disposé verticalement.

9. Filtre à produit fissile suivant l'une des revendications précédentes, caractérisé en ce que sur le filtre sont fixés par des liaisons par coulisseau à étanchéité par segment de piston sur les tuyaux d'amenée et d'évacuation pour le gaz (14, 15).

10. Filtre à produit fissile suivant l'une des revendications précédentes, caractérisé en ce qu'il est prévu un dispositif pouvant être télécommandé, par lequel, après le démontage du conduit inférieur pour le gaz chaud, le filtre peut être saisi par la carcasse intérieure (9), la fermeture de type à baïonnette à la carcasse supérieure (8) peut être desserrée par rotation et le filtre peut être déplacé vers le bas.

Fig. 1

Fig. 2

Fig. 3

Fig. 4

Fig. 5